# EUROPÄISCHE PATENTANMELDUNG

(11) **EP 2 194 112 A1**
(43) Veröffentlichungstag der Anmeldung: **09.06.2010**
(21) Anmeldenummer: 09015158.0
(22) Anmeldetag: 08.12.2009
(51) Int. Cl.: C10L 5/44

(54) **Brennstoff-Pellets aus Laub und Verfahren zur Pelletherstellung**

(30) Priorität: 08.12.2008 DE 102008060652
(71) Anmelder: Rohstoff- und Pelletwerk Friesoythe GmbH & Co. KG, 26169 Friesoythe (DE)
(72) Erfinder: Boden, Joerg, 26169 Friesoythe (DE); Frost, Ernst, Dipl.-Ing., 27793 Wildeshausen (DE); Bullermann, Manfred, Dipl.-Ing., 26169 Friesoythe (DE); Graue, Michael, Dipl.-Ing., 26169 Friesoythe (DE); Brand, Stefan, 20357 Hamburg (DE)
(74) Vertreter: Kossak, Sabine

(57) **Zusammenfassung**

Gegenstand der Erfindung sind Brennstoff-Pellets bestehend aus Laub und ein Verfahren zur Herstellung der Brennstoff-Pellets aus Laub. Bisher wird Straßenlaub vielfach als Abfall entsorgt oder allenfalls einer Kompostierung zugeführt. Die Erfindung stellt hingegen ein Produkt und ein Verfahren bereit, um eine stoffliche und eine energetische Verwertung der Großmengen anfallenden Straßenlaubs zu ermöglichen

## Beschreibung

Gegenstand der Erfindung sind Brennstoff-Pellets bestehend aus Laub und ein Verfahren zur Herstellung der Brennstoff-Pellets aus Laub.

Im Herbst fallen an allen Straßen an denen sich Laubbäume befinden größere Mengen Laub an. Dieses Laub wird üblicherweise als Straßenlaub bezeichnet und stellt für die meisten Stadtreinigungen eine große Belastung dar. Das Straßenlaub muss bisher als Abfall entsorgt werden, da eine stoffliche oder energetische Verwertung am Störstoffgehalt und der Kontaminierung mit normalen Hausabfällen, Luftschadstoffen oder Straßen- bzw. Marktabfällen scheitert. Allein die Stadt Hamburg hatte im Jahr 2006 ein Straßenlaubaufkommen von 14.600 t, die von der Stadtreinigung entsorgt werden mussten. Bisher wird dieses Straßenlaub je nach Kontaminierungsstand allenfalls der Kompostierung zugeführt bzw. als Bodendünger verwendet.

Neben den Laubabfällen fallen bei der städtischen Landschaftspflege auch größere Mengen Strauchschnitt und Laubholzschnitt an. Auch dieser Strauchabschnitt bzw. der in hohen Anteil Laubhölzer enthaltende Laubschnitt beispielsweise von Ästen oder von Baumkronen an Straßenrändern muss derzeitig entsorgt werden oder wird ähnlich, wie ein gering kontaminierter Laubabfall, der Kompostierung zugeführt.

Da die Verrottung und die Kompostierung ein langwieriger Prozess ist, besteht hierfür jedoch genauso wie für die Deponierung ein erheblicher Platzbedarf. Es gibt deshalb verschiedene Vorschläge diese Probleme zu lösen. So schlägt die DE 3807017A1 vor, dass aufgesammelte Laub mechanisch zuzerkleinern und hieraus unter Druck ein Streu zu erzeugten, dass dann auf Beeten- oder Rasenflächen aufgebracht wird und dort verrottet. Das eingesetzte Laub setzt jedoch voraus, dass diese frei von üblichen Straßenabfällen oder Schadstoffen ist, sodass sich das Verfahren nicht für Straßenlaub sondern nur für gereinigte Gartenabfälle anwenden lässt.

Die DE202006017163 offenbart zudem die Brikettierung von Laub, wobei Laubzusatzstoffe beispielsweise in Form von Mineralien beigemengt werden, damit die so herstellten Briketts in der Landwirtschaft als Dünger eingesetzt werden können. Auch dieses Verfahren kann nicht für ungereinigtes Straßenlaub angewendet werden, da ansonsten die im Straßenlaub enthaltenen Müllreste und Schadstoffe in den Boden der Landwirtschaft gelangen würden.

Aufgabe der vorliegenden Erfindung ist es daher eine energetisch und stofflich sinnvolle Verwertung von Laub, insbesondere Straßenlaub und Strauchschnitt bereitzustellen, sowie ein kostengünstiges und einfaches Verfahren zur Aufarbeitung des ungereinigten Straßenlaubs das eine Verwertung des Straßenlaubs trotz der darin enthaltenen Müllreste und Störstoffe erlaubtund eine langfristige Lagerung sicherstellen kann.

Die Aufgabe wird erfindungsgemäß gelöst durch Brennstoff-Pellet bestehend aus Laub oder einem Laub/Strauchschnittgemisch, **dadurch gekennzeichnet, dass** das Laub ausschließlich Blätter, Zweig- und/oder Aststücke und/oder Baumreste enthält.

Weiterhin wird die Aufgabe erfindungsgemäß gelöst durch ein Verfahren zur Herstellung von Brennstoff-Pellets aus Laub, **dadurch gekennzeichnet, dass** das Verfahren mindestens folgende Schritte umfasst:
B. Trocknen von ungereinigtem Laubabfall in einem Trockner, Einstellung des Wassergehalts
C. Separieren des ungereinigten, getrockneten Laubs in einem Separationsteil, wobei der Laubabfall in mindestens zwei Fraktionen geteilt wird, von denen eine Fraktion eine gereinigte Laubfraktion ist,
D. Transport der gereinigten Laubfraktion in eine Zerkleinerungsvorrichtung,
E. Zerkleinerung der gereinigten Laubfraktion, vorzugsweise in einer Mühle oder einem Schredder und
F. Verpressen des zerkleinerten und gereinigten Laubs unter hohem Druck in einer Presse.

Weitere Ausführungsformen sind Gegenstand der Unteransprüche oder nachfolgend beschrieben.

Überraschenderweise lässt sich das Laub in gereinigter Form Pelletieren und zeigt einen guten Brennwert, sodass es als Brennstoff eingesetzt werden kann. Die Pellets sind dabei ohne weitere Zusatzstoffe stabil und erlauben eine gleichmäßige Verbrennung. Die erfindungsgemäßen Brennstoff-Pellets weisen zudem einen hohen Ascheschmelzpunkt auf, so dass sie eine geringe Aschebildung und keine Verschlackung zeigen. Auch dieses wird durch den hohen Brennwert begünstigt.

Unter Laub werden üblicherweise die von den Bäumen gefallenen Blätter verstanden. Das erfindungsgemäß verwendete Laub enthält ausschließlich diese Blätter und ggf. kleine Zweige und/oder Äste und Baumreste oder Bruchstücke hiervon. Übliche Baumreste sind beispielsweise Rindenstücke, Wurzelstücke oder auch kleine Holzabsplitterungen vom Stamm oder von den Ästen selbst.

Bei dem erfindungsgemäß eingesetzten Laub kann es sich beispielsweise um Gartenlaub, auf öffentlichen Grünflächen wie Parks gesammeltes Laub oder Straßenlaub handeln. Abhängig vom Sammelort enthält dieses Laub mehr oder weniger Störstoffe und Kontaminationen. Das im privaten Bereich gesammelte Laub enthält dabei häufig den geringsten Anteil an Störstoffen.

Als Straßenlaub wird, wie bereits oben erläutert, das an Straßen bzw. Verkehrsflächen anfallende Laub insbesondere im Herbst bezeichnet.

Bevorzugt werden die erfindungsgemäßen Brennstoff-Pellets aus gereinigtem Straßenlaub hergestellt, das frei von Störstoffen ist. Das gereinigte Straßenlaub wird bevorzugt mit dem erfindungsgemäßen Verfahren gereinigt und zu Brennstoff-Pellets verarbeitet.

Die erfindungsgemäßen Brennstoff-Pellets können auch aus einem Gemisch von Laub und Strauchschnitt bestehen. Der Anteil Laub beträgt dabei mindestens 5 Gew. % der Mischung. Unter Strauchschnitt im Sinne der Erfindung werden die üblichen Abschnitte von Sträuchern, wie sie in Gärten, Parks oder größeren Anlagen anfallen, ebenso verstanden, wie die Abschnitte, die beim Laubholzschnitt in der Landschaftspflege entstehen. Der Strauchschnitt umfasst somit ausschließlich Äste, Zweige oder Ast- oder Zweigteile. Üblicherweise lässt sich Strauchschnitt nicht zu Brennstoff-Pellets verformen, da Laubhölzer keinen oder nur einen geringen Ligninanteil enthalten. Überraschenderweise hat sich herausgestellt, dass sofern klein gemahlenem Strauchschnitt oder Laubholzabschnitt, Laub in einer Menge von mindestens 5%, bevorzugt 10%, besonders bevorzugt mindestens 20% Laub zugesetzt wird, stabile Brennstoff-Pellets entstehen, ohne das ein weiteres Bindemittel zugesetzt werden muss. Erfindungsgemäß wird den Brennstoff-Pellets aus Laub oder Laub/Strauchschnittgemisch kein weiteres Bindemittel zugesetzt, da der Begriff bestehend aus hier als abschließende Definition verstanden wird.

Die Brennstoff-Pellets können jede für Festbrennstoff übliche Form haben, wobei erfindungsgemäß die Pellets in zylindrischer Form oder Kugelform bevorzugt sind. Die erfindungsgemäßen Brennstoff-Pellets weisen zudem bevorzugt einen gegenüber Laubabfällen deutlich reduzierten Feuchtegehalt auf. Durch die geringe Restfeuchte, die auf bis zu 1/3 der ursprünglichen Laubfeuchtigkeit reduziert ist, wird eine bessere Lagerstabilität und ein guter Brennwert erreicht.

Die erfindungsgemäßen Brennstoff-Pellets haben den besonderen Vorteil, dass sie einen hohen Brennwert aufweisen. Durch den hohen Ascheschmelzpunkt zeigen sie zudem nur einen geringe Ascheauswurf. Die Verarbeitung des Laubs zu Pellets führt zu einem günstigen Raum/Gewichtverhältnis, so dass große Mengen Brennstoff auf kleiner Fläche gelagert werden können. Durch die Verwendung von gereinigtem Straßenlaub oder sauberem Gartenlaub weisen die Pellets nur einen geringen Mineralanteil und keine bei der Verbrennung schädlichen Störstoffe auf. Die Pelletform erlaubt zudem eine pneumatische Förderung und die geringe Feuchtigkeit der Pellets führt zu einer besseren Rieselfähigkeit, da die Pellets nicht kleben oder klumpen. Zudem führt die geringe Feuchtigkeit zu einer hohen Lagerstabilität, da die erfindungsgemäßen Brennstoff-Pellets im Gegensatz zu vergleichbaren Produkten aufgrund der geringen Feuchte nicht schimmeln.

Das erfindungsgemäße Verfahren erlaubt es überraschenderweise die Laubabfälle und Strauchschnitte einer sinnvollen energetischen Verwertung zuzuführen. Dabei können als Laubabfälle sowohl einfache Gartenabfälle, Parkabfälle oder bevorzugt ungereinigtes Straßenlaub eingesetzt werden. Besonders effektiv lässt sich das erfindungsgemäß Verfahren für ungereinigtes Straßenlaub einsetzen, das ansonsten nur mit großem Platzbedarf kompostiert werden kann oder bei einer hohen Müll oder Schadstoffbelastung deponiert werden muss.

Ungereinigtes Straßenlaub wird von einigen Kommunen als vorgepresstes Ausgangsmaterial beispielsweise im Presswagen angeliefert. Wenn der als Ausgangsmaterial eingesetzte Laubabfall in vorgepresster Form liegt, wird deshalb vorzugsweise ein weiterer Verfahrensschritt im erfindungsgemäßen Verfahren durchgeführt, nämlich:

### A. Zerkleinerung des Laubabfalls.

Die Zerkleinerung erfolgt beispielsweise in einer Zerkleinerungsvorrichtung oder im Trockner.

Beim erfindungsgemäßen Verfahren zur Herstellung von Brennstoff-Pellets aus Laub wird dann dieses beispielsweise durch eine Schnecke gefördert zur Zerkleinerung oder der Laubabfall direkt in einen Trockner gegeben. Übliche Laubabfälle weisen einen Feuchtigkeitsgehalt von 30% bis 55% je nach Zeitpunkt der Sammlung auf. Bevorzugt verbleibt das Material solang im Trockner bis eine Restfeuchte vorliegt die eine stabile Lagerung erlaubt. Im Trockner wird durch die ständige Durchmischung des Materials bevorzugt zusätzlich eine weitere Zerkleinerung des Materials und eine Auflockerung bewirkt. Optional können im Trockner Zuschlagstoffe zugegeben werden.

Der getrocknete Laubabfall wird in einen Separationsvorrichtung gegeben, in dem die verschiedenen Störstoffe vom Laub selbst abgetrennt werden. Dabei erfolgt bevorzugt eine mechanische, magnetische oder pneumatische Separation der einzelnen Bestandteile. Der Laubabfall wird dabei in mindestens zwei Fraktionen geteilt, von denen eine Fraktion eine gereinigte Laubfraktion ist.

In einer Ausführungsform ist die Separationsvorrichtung, die in dem erfindungsgemäßen Verfahren eingesetzt wird, wie folgt aufgebaut:
Im vorderen Bereich findet die Abscheidung des auf dem Laub haftenden Sandes statt. Dieser wird durch eine Vibrolochrinne mit Schiebern geleitet. Der abfallende Sand wird per Schnecke zum Silo befördert. Kleine metallische Bestandteile werden durch Permanentmagneten im hinteren Bereich aufgefangen. Bevorzugt befindet sich in die Separationsvorrichtung im hinteren Bereich eine Öffnung über die der Laubabfall mit Druckluft geblasen wird. Durch den Dichteunterschied der einzelnen Bestandteile verbleiben die schweren Bestandteile, wie Steine, größere Äste und metallische Abfälle vor der Hürde/in der Öffnung hängen und können nach unten abtransportiert werden. Die leichteren Laubbestandteile wie Blätter, kleine Äste und kleine Rindenstücke werden hingegen über die Hürde/Öffnung transportiert. Die sehr leichten Bestandteile wie Folien werden gleichzeitig durch die Absaugvorrichtung nach oben gezogen und bleiben in der Entspannungskammer hängen. Hinter der Barriere befindet sich somit nur die gereinigte Laubfraktion die ausschließlich aus Laub, Zweig-/oder Aststücken und/oder Baumresten besteht und keine anderen Bestandteile enthält

Diese gereinigte Laubfraktion wird in eine Zerkleinerungsvorrichtung transportiert und in der Zerkleinerungsverrichtung erneut zerkleinert. Die Zerkleinerungsvorrichtung ist dabei vorzugsweise eine Mühle oder ein Schredder. Die gereinigte Laubfraktion wird dabei vorzugsweise so zerkleinert, dass sie eine Körnung von 0 bis 6 mm aufweist.

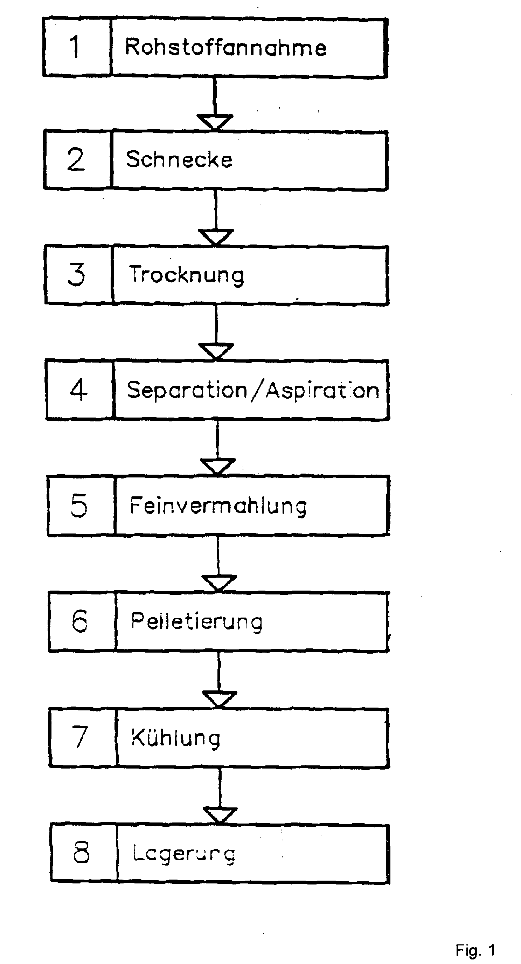

Das zerkleinerte und gereinigte Laub wird dann in einer Presse zu Laub/Pellets verpresst unter hohem Verdichtungsdruck Das erfindungsgemäße Verfahren ist optional mit einer Vorrichtung zur Staubaspiration und Staubrückführung in den Produktionsprozess versehen. Dieses trägt zu einer saubereren Prozessführung und der besseren Verwertung der Rohstoffe im Rahmen der Staubrückführung bei.
Eine Ausführungsform der Erfindung wird anhand der Figur 1 näher erläutert. Figur 1 zeigt ein Verfahrensfließbild des erfindungsgemäßen Verfahrens zur Herstellung von Brennstoff-Pellets in einer Ausführungsform. Von der Rohstoffannahme (1) aus wird das angelieferte Material mit einer Schnecke (2) in einen Trockner (3) befördert. In der Schnecke erfolgt eine weitere Zerkleinerung und Durchmischung des Materials. Von der Schnecke gelangt das Material in den Trockner (3), worin getrocknet wird bis ein bestimmter Feuchtegehalt erreicht ist und zudem eine weitere Durchmischung und Erwärmung erfolgt. Vom Trockner (3) gelangt das Material in die Separationseinrichtung (4) zur Störstoffabscheidung und danach zur Zerkleinerungsvorrichtung in der die Feinvermahlung (5) erfolgt. Das so getrocknete und gemahlene Material wird dann in einer Presse zur Pelletierung (6) zugeführt. Die fertig gepressten Pellets werden zunächst gekühlt (7) und durch Sieben von nicht gepresstem Material befreit. Die Pellets können dann zur Lagerung (8) zugeführt werden.

## Patentansprüche

1. Brennstoff-Pellet bestehend aus Laub oder einem Laub/Strauchschnittgemisch, **dadurch gekennzeichnet, dass** das Laub ausschließlich Blätter Laub, Zweig- und/oder Aststücke und/oder Baumreste enthält

2. Brennstoff-Pellet gemäß Patentanspruch 1, **dadurch gekennzeichnet, dass** das Laub gereinigtes Straßenlaub ist oder ein Laub/Strauchschnittgemisch, das mindestens 5 Gew.-% Laub enthält.

3. Brennstoff-Pellet gemäß einem der vorherigen Ansprüche, **dadurch gekennzeichnet, dass** die Pellets eine zylindrische Form haben.

4. Verfahren zur Herstellung von Brennstoff-Pellets aus Laub, **dadurch gekennzeichnet, dass** das Verfahren mindestens folgende Schritte umfasst:
B. Trocknen von ungereinigtem Laubabfall in einem Trockner,
C. Separieren des ungereinigten, getrockneten Laubs in einem Separationsteil, wobei der Laubabfall in mindestens zwei Fraktionen geteilt wird, von denen eine Fraktion eine gereinigte Laubfraktion ist,
D. Transport der gereinigten Laubfraktion in eine Zerkleinerungsvorrichtung,
E. Zerkleinerung der gereinigten Laubfraktion, vorzugsweise in einer Mühle und
F. Verpressen des zerkleinerten und gereinigten Laubs in einer Presse zu Brennstoff-Pellets.

5. Verfahren gemäß Anspruch 4, **dadurch gekennzeichnet, dass** vor der Trocknung folgender weiterer Verfahrensschritt durchgeführt wird:
A. Zerkleinerung des Laubabfalls.

6. Verfahren gemäß einem der Ansprüche 1 - 5 **dadurch gekennzeichnet, dass** als Laubabfall ungereinigtes Straßenlaub eingesetzt wird.

7. Verfahren gemäß einem der Ansprüche 1-6 **dadurch gekennzeichnet, dass** das Laubabfall in vorgepresster Form vorliegt.

8. Verfahren gemäß einem der Ansprüche 1 - 7 **dadurch gekennzeichnet, dass** die Separation der Laubbestandteile gemäß Schritt C in einer Vorrichtung erfolgt in der Druckluft über eine Hürde/Öffnung geblasen wird, wobei sich die schweren Bestandteile vor der Hürde/in der Öffnung sammeln, die leichteren Laubbestandteile über die Hürde/Öffnung transportiert werden und die wesentlich leichteren Folien in der Entspannungskammer der abgesaugten Luft hängen bleiben.
